# EUROPÄISCHE PATENTSCHRIFT

(11) **EP 4 214 100 B1**
(45) Veröffentlichungstag und Bekanntmachung des Hinweises auf die Patenterteilung: **17.09.2025**
(21) Anmeldenummer: 21751780.4
(22) Anmeldetag: 23.07.2021
(51) Int. Cl.: B60W 30/18, B60W 30/14, B60W 60/00

(54) **VERFAHREN ZUM BETRIEB EINES AUTOMATISIERT FAHRENDEN FAHRZEUGS**
METHOD FOR OPERATING AN AUTOMATICALLY DRIVING VEHICLE
PROCÉDÉ PERMETTANT DE FAIRE FONCTIONNER UN VÉHICULE À CONDUITE AUTOMATIQUE

(30) Priorität: 21.09.2020 DE 102020005754
(43) Veröffentlichungstag der Anmeldung: 26.07.2023
(73) Patentinhaber: Mercedes-Benz Group AG, 70372 Stuttgart (DE)
(72) Erfinder: KLEINSCHMIDT, Sebastian, 73728 Esslingen (DE); STEIN, Fridtjof, 73760 Ostfildern (DE)
(74) Vertreter: Novagraaf Group
(86) Internationale Anmeldenummer: PCT/EP2021/070677
(87) Internationale Veröffentlichungsnummer: WO 2022/058073

(56) Entgegenhaltungen:
- EP-A1- 3 091 370
- WO-A1-2019/215222
- DE-A1- 102011 100 907
- DE-A1- 102016 219 762
- US-A1- 2015 066 329

## Beschreibung

Die Erfindung betrifft ein Verfahren zum Betrieb eines automatisiert fahrenden Fahrzeugs.

Der Erfindung betrifft weiterhin eine Vorrichtung zur Durchführung eines solchen Verfahrens und ein Fahrzeug, umfassend eine solche Vorrichtung.

Aus der DE 10 2011 100 907 A1 ist ein Verfahren zur Ermittlung eines Fahrbahnzustands einer vor einem Fahrzeug befindlichen Fahrbahn bekannt, wobei mittels eines bildgebenden Sensors eine Fahrbahnoberfläche erfasst und mittels einer Auswerteeinheit mittels des bildgebenden Sensors erfasste Bilddaten ausgewertet und aus den Bilddaten der Fahrbahnzustand ermittelt wird. Mittels einer Sendeeinheit des bildgebenden Sensors wird elektromagnetische Strahlung im Terahertz-Bereich auf die Fahrbahnoberfläche ausgesendet und mittels einer Empfangseinheit des bildgebenden Sensors wird an der Fahrbahnoberfläche reflektierte elektromagnetische Strahlung im Terahertz-Bereich erfasst. Mittels der Auswerteeinheit wird zur Ermittlung des Fahrbahnzustands aus den erfassten Bilddaten in Bildbereichen, welche eine erhöhte Reflexion der elektromagnetischen Strahlung im Terahertz-Bereich zeigen, ein Nässebelag, Schneebelag und/oder Eisbelag auf der Fahrbahnoberfläche ermittelt. Ergebnisse aus der Fahrbahnanalyse werden von verschiedenen Fahrerassistenzsystemen des Fahrzeugs zu deren Betrieb verwendet.

Aus der DE 10 2016 219 762 A1 ist ein Verfahren zum Betreiben eines Fahrzeugs bekannt, bei dem das Fahrzeug von einer fahrzeugexternen Informationsquelle eine Warnung über eine vorausliegende Gefahr erhält und bei der das Fahrzeug bei einer Annäherung an die Gefahr seine Geschwindigkeit auf eine sichere Geschwindigkeit reduziert.

Aus der EP 3 091 730 A1 ist ein Verfahren zur Bestimmung einer sicheren Trajektorie für ein Fahrzeug bekannt, bei dem vorgesehen ist, dass erkennbare Hindernisse vor dem Fahrzeug und nicht einsehbare Bereiche hinter den Hindernissen detektiert werden, dass virtuelle Hindernisse den nicht einsehbaren Bereichen zugeführt werden, dass den erkennbaren Hindernissen und den virtuellen Hindernissen hypothetische Ereignisse und zugehörige Eintrittswahrscheinlichkeiten zugewiesen werden und dass die sichere Trajektorie des Fahrzeug basierend auf den erkennbaren Hindernissen, den virtuellen Hindernissen und den Eintrittswahrscheinlichkeiten bestimmt wird.

Aus der DE 10 2011 100 907 A1 ein Verfahren zur Ermittlung eines Fahrbahnzustands einer sich vor einem Fahrzeug befindenden Fahrbahn bekannt, wobei die Ermittlung auf der Erfassung einer Fahrbahnoberfläche der Fahrbahn mittels eines bildgebend Sensors und der Auswertung von Bilddaten des bildgebenden Sensors beruht.

Aus der US 2015/0 0663 329 A1 ist ein Verfahren zur Geschwindigkeitsregelung für ein Fahrzeug bekannt, wobei mit einem Senor des Fahrzeugs eine dem Fahrzeug vorausliegende Fahrstrecke abgetastet wird und wobei angenommen wird, dass sich ein Hindernis außerhalb eines vom Sensor einsehbaren Bereichs befindet und eine Warnung in Abhängigkeit einer zur Einhaltung eines Mindestabstands zu dem Hindernis erforderlichen Verzögerung ausgeben wird.

Aus der WO 2019/215 222 A1 ist ein Verfahren zum Betreiben eines Fahrzeugs bekannt, bei dem vorgesehen ist, dass mehrere Auswerteeinheiten auf Sensoreinheiten des Fahrzeugs zugreifen und dass eine Konfliktprüfung von Anfragen der auf die Sensoreinheiten zugreifenden Auswerteeinheiten durchgeführt wird.

Der Erfindung liegt die Aufgabe zu Grunde, ein neuartiges Verfahren zum Betrieb eines automatisiert fahrenden Fahrzeugs, eine Vorrichtung zur Durchführung eines solchen Verfahrens und ein Fahrzeug, umfassend eine solche Vorrichtung, anzugeben.

Die Aufgabe wird erfindungsgemäß gelöst durch ein Verfahren, welches die im Anspruch 1 angegebenen Merkmale aufweist, durch eine Vorrichtung, welche die im Anspruch 10 angegebenen Merkmale aufweist, und durch ein Fahrzeug, welches die im Anspruch 12 angegebenen Merkmale aufweist.

Vorteilhafte Ausgestaltungen der Erfindung sind Gegenstand der Unteransprüche.

In dem Verfahren zum Betrieb eines automatisiert fahrenden Fahrzeugs wird erfindungsgemäß dann, wenn erkannt wird, dass
- sich das Fahrzeug einer Kurve nähert,
- auf einer kurvenäußeren Seite des Fahrzeugs eine benachbarte freie Fahrspur vorhanden ist,
- aufgrund der vorausliegenden Kurve eine Sichtweitenbeschränkung zumindest einer in Fahrtrichtung des Fahrzeugs gerichteten Erfassungseinheit, beispielsweise einer Kamera, einer Umgebungssensorik vorliegt und
- in der Kurve aufgrund einer Fahrbahnbeschaffenheit ein gegenüber einem vorgegebenen Sollwert verlängerter Bremsweg und/oder eine verringerte Bodenhaftung des Fahrzeugs und/oder anderer Fahrzeuge vorliegen oder vorliegt,
automatisch ein Spurwechsel des Fahrzeugs auf die kurvenäußere benachbarte freie Fahrspur durchgeführt und vorzugsweise zusätzlich eine momentane Fahrgeschwindigkeit des Fahrzeugs automatisch reduziert.

Beim Betreiben von autonomen Fahrzeugen, beispielsweise Lastkraftwagen, ist es von hohem Interesse, möglichst immer mit der am höchsten zugelassenen Geschwindigkeit zu fahren, um eine Zeit des Fahrzeugs und dessen Ladung auf der Straße aus wirtschaftlichen Gründen zu minimieren. Beim Befahren einer Kurve ist eine Sicht auf eine eigene Fahrspur in der Reichweite mitunter durch Sichthindernisse, wie beispielsweise Leitplanken, eine Bebauung oder Pflanzen am Fahrbahnrand, eingeschränkt. Dies gilt besonders für die kurveninnerste Fahrspur. Zusätzlich hat auch eine Fahrbahnbeschaffenheit einen wichtigen Einfluss auf eine Fahrstabilität des Fahrzeugs und anderer Fahrzeuge in der Kurve. Beispielsweise kann ein Wegrutschen eines Motorrads in der Kurve durch eine Haftung zwischen Reifen und Fahrbahnoberfläche beeinflussende Eigenschaften der Fahrbahnbeschaffenheit begünstigt werden.

Durch Anwendung des Verfahrens und durch einen damit verbundenen Spurwechsel auf die äußere Fahrspur und/oder die automatische Reduzierung der momentanen Fahrgeschwindigkeit, ist es möglich, präventiv die Sichtweite der zumindest einen Erfassungseinheit im Bereich der Kurve zu erhöhen und das Fahrzeug präventiv mit einer optimierten Fahrgeschwindigkeit die Kurve durchfahren zu lassen. Somit kann das Fahrzeug bei einem nicht überfahrbaren Objekt auf seiner Fahrspur rechtzeitig eine Notbremsung und/oder ein Ausweichmanöver einleiten, wobei das Risiko einer Kollision des Fahrzeugs mit dem Objekt erheblich verringert ist. Insbesondere kann aufgrund der frühzeitigen Ermittlung der Fahrbeschaffenheit ein Risiko für stürzende Motorradfahrer ermittelt werden und in Abhängigkeit dieses Risikos die automatische Steuerung des Fahrzeugs hinsichtlich der Wahl der Fahrspur und der Fahrgeschwindigkeit angepasst werden. Somit wird eine Gefahr einer Kollision mit einem Objekt, insbesondere einer auf der Fahrbahn befindlichen Person, welche durch Sichteinschränkungen der Kurve verdeckt wurde und sich gegebenenfalls aufgrund eines durch die Fahrbeschaffenheit verursachten Unfalls, beispielsweise eines Motorradunfalls, auf der Fahrbahn befindet, signifikant verringert.

In einer möglichen Ausgestaltung des Verfahrens wird ein Vorliegen des aufgrund einer Fahrbahnbeschaffenheit gegenüber einem vorgegebenen Sollwert verlängerten Bremswegs und/oder der verringerten Bodenhaftung des Fahrzeugs und/oder anderer Fahrzeuge anhand einer Erfassung von Splitt und/oder Niederschlag, beispielsweise Regen, Schnee oder Eis, auf einer Fahrbahnoberfläche erkannt. Vorzugsweise wird der Sollwert dabei in Abhängigkeit der aktuellen Fahrgeschwindigkeit des Fahrzeugs variabel vorgegeben. Insbesondere bei Vorliegen einer durch Splitt und/oder Niederschlag geprägten Fahrbahnoberfläche, ist eine Haftung zwischen Reifen eines Fahrzeugs und der Fahrbahnoberfläche besonders gering. Daraus resultieren große Bremswege und für Motorradfahrer steigt das Risiko eines Wegrutschens in einer Kurve signifikant. Durch Berücksichtigung dieser Eigenschaften zur Ermittlung der Fahrbahnbeschaffenheit kann einerseits eine Fahrt des Fahrzeugs durch die Kurve stabilisiert werden und gleichzeitig kann die Fahrweise des Fahrzeugs an das Risiko einer Kollision mit weiteren die Kurve durchfahrenden Fahrzeugen, insbesondere gestürzten oder stürzenden Motorradfahrern signifikant reduziert werden. Das heißt, in Abhängigkeit eines Risikos für das Wegrutschen eines Motorrads in einer Kurve, können bereits vor der Durchfahrung der Kurve Fahrparameter des eigenen Fahrzeugs angepasst werden, um eine Kollision mit dem Motorrad und/oder mit dem Motorrad verunfallenden oder verunfallten Personen zu vermeiden.

In einer weiteren möglichen Ausgestaltung des Verfahrens wird eine Sichtweitenbeschränkung erkannt, wenn die Sichtweite der zumindest einen Erfassungseinheit einen vorgegebenen Schwellwert unterschreitet, wobei der Schwellwert in Abhängigkeit der momentanen Fahrgeschwindigkeit des Fahrzeugs variabel vorgegeben wird. Insbesondere ist der Schwellwert umso niedriger, je höher die momentane Fahrgeschwindigkeit ist. Der Spurwechsel wird beispielsweise dann ausgelöst, wenn die Sichtweite der zumindest einen Erfassungseinheit den Schwellwert unterschreitet. Die Sichtweite wird durch den Spurwechsel auf die kurvenäußere Fahrspur erhöht, so dass die Sicherheit im automatisierten Fahrbetrieb des Fahrzeugs erhöht werden kann und das Fahrzeug in der Lage ist, durch eine Bremsung und/oder ein Ausweichmanöver eine Kollision mit einem nicht überfahrbaren Objekt zumindest weitestgehend zu vermeiden, wobei Verkehrsteilnehmer in einer Umgebung des Fahrzeugs berücksichtigt werden.

In einer weiteren möglichen Ausgestaltung des Verfahrens wird das Vorhandensein einer kurvenäußeren Fahrspur anhand von Kartendaten einer digitalen Karte und/oder zumindest anhand erfasster Signale einer Kamera des Fahrzeugs ermittelt. Dies ermöglicht, dass erst wenn eine zuverlässige Information über das Vorhandensein einer kurvenäußeren Fahrspur vorliegt, ein Spurwechsel eingeleitet wird, wodurch die Sicherheit im Straßenverkehr erhöht werden kann.

In einer weiteren möglichen Ausgestaltung des Verfahrens wird der Spurwechsel in Abhängigkeit einer vor dem Fahrzeug erfassten Verkehrsdichte durchgeführt. Dabei wird der Spurwechsel insbesondere dann durchgeführt, wenn das Fahrzeug weitestgehend allein auf dem Fahrstreckenabschnitt fährt oder wenn ein ausreichend großer Abstand zu nachfolgenden Fahrzeugen vorhanden ist, so dass das Fahrzeug nach Durchfahrt der Kurve zurück auf seine ursprüngliche Fahrspur fahren kann.

In einer weiteren möglichen Ausgestaltung des Verfahrens wird die momentane Fahrgeschwindigkeit des Fahrzeugs an eine kurven- und/oder kuppeninduzierte Sichtweitenbeschränkung der zumindest einen Erfassungseinheit angepasst. Die momentane Fahrgeschwindigkeit des Fahrzeugs wird zur Erhöhung der Sicherheit beispielsweise im Betrieb des Fahrzeugs verringert, wenn die Sichtweite der zumindest einen Erfassungseinheit vergleichsweise gering ist, wobei hierzu ein weiterer Schwellwert in Bezug auf die Sichtweite vorgegeben sein kann.

In einer weiteren möglichen Ausgestaltung des Verfahrens wird eine erforderliche Sichtweite der zumindest einen Erfassungseinheit anhand eines prognostizierten momentanen Bremswegs des Fahrzeugs ermittelt, wobei der Bremsweg abhängig ist von einer maximalen Eigenverzögerung und einer Eigengeschwindigkeit des Fahrzeugs, also der momentanen Fahrgeschwindigkeit. Insbesondere ist die erforderliche Sichtweite der zumindest einen Erfassungseinheit umso größer, je höher die momentane Fahrgeschwindigkeit ist, da sich der Bremsweg bei zunehmender Fahrgeschwindigkeit verlängert. Es kann also erreicht werden, dass das Fahrzeug bei einem erfassten nichtüberfahrbaren Objekt auf seiner Fahrspur in der Lage ist, eine Bremsung einzuleiten, so dass eine Kollision mit dem Objekt zumindest weitestgehend ausgeschlossen werden kann.

Die Vorrichtung zur Durchführung eines zuvor beschriebenen Verfahrens zeichnet sich erfindungsgemäß durch eine Datenverarbeitungseinheit aus, die mit der zumindest einen Erfassungseinheit der Umgebungssensorik des Fahrzeugs verbunden ist. Die Datenverarbeitungseinheit ist ausgebildet, als Voraussetzungen zu erkennen, ob
- sich das Fahrzeug einer Kurve nähert,
- auf einer kurvenäußeren Seite des Fahrzeugs eine benachbarte freie Fahrspur vorhanden ist,
- aufgrund der vorausliegenden Kurve eine Sichtweitenbeschränkung zumindest einer in Fahrtrichtung des Fahrzeugs gerichteten Erfassungseinheit einer Umgebungssensorik vorliegt und
- in der Kurve aufgrund einer Fahrbahnbeschaffenheit ein gegenüber einem vorgegebenen Sollwert verlängerter Bremsweg und/oder eine verringerte Bodenhaftung des Fahrzeugs und/oder anderer Fahrzeuge vorliegen oder vorliegt.

Weiterhin ist die Datenverarbeitungseinheit ausgebildet, bei Vorliegen der Voraussetzungen eine entsprechende Information an einen Trajektoriengenerator zu leiten, welcher wiederum ausgebildet ist, zumindest eine Trajektorie für den Spurwechsel auf die kurvenäußere freie Fahrspur zu erzeugen und die erzeugte Trajektorie an eine Aktuatorik des Fahrzeugs zu übermitteln und vorzugsweise zusätzlich eine momentane Fahrgeschwindigkeit des Fahrzeugs automatisch zu reduzieren.

Mittels der Vorrichtung ist das Fahrzeug in der Lage, auf die kurvenäußere Fahrspur zu wechseln und seine Fahrgeschwindigkeit derart anzupassen, dass präventiv die Sichtweite der zumindest einen Erfassungseinheit im Bereich der Kurve erhöht ist und das Fahrzeug präventiv mit einer optimierten Fahrgeschwindigkeit die Kurve durchfährt. Somit kann das Fahrzeug bei einem nicht überfahrbaren Objekt auf seiner Fahrspur rechtzeitig eine Notbremsung und/oder ein Ausweichmanöver einleiten, wobei das Risiko einer Kollision des Fahrzeugs mit dem Objekt erheblich verringert ist. Insbesondere kann aufgrund der frühzeitigen Ermittlung der Fahrbeschaffenheit ein Risiko für stürzende Motorradfahrer ermittelt werden und in Abhängigkeit dieses Risikos die automatische Steuerung des Fahrzeugs hinsichtlich der Wahl der Fahrspur und der Fahrgeschwindigkeit angepasst werden. Somit wird eine Gefahr einer Kollision mit einem Objekt, insbesondere einer auf der Fahrbahn befindlichen Person, welche durch Sichteinschränkungen der Kurve verdeckt wurde und sich gegebenenfalls aufgrund eines durch die Fahrbeschaffenheit verursachten Unfalls, beispielsweise eines Motorradunfalls, auf der Fahrbahn befindet, signifikant verringert.

Des Weiteren kann die Vorrichtung Bestandteil eines Fahrzeugs sein, welches als automatisiert fahrender Lastkraftwagen oder als automatisiert fahrender Personenkraftwagen ausgebildet ist, wobei mittels der Vorrichtung und des Verfahrens, wie oben beschrieben, insbesondere eine Verkehrssicherheit optimiert werden kann.

Ausführungsbeispiele der Erfindung werden im Folgenden anhand von Zeichnungen näher erläutert.

Dabei zeigen:
- Fig. 1: schematisch ein Fahrzeug mit einer Erfassungseinheit und sich in einem Erfassungsbereich befindenden, für das Fahrzeug nichtüberfahrbaren Objekt.
- Fig. 2: schematisch einen Fahrstreckenabschnitt mit mehreren Fahrspuren und einem auf einer kurvenäußeren Fahrspur fahrenden Fahrzeug und
- Fig. 3: schematisch den Fahrstreckenabschnitt und mit einem auf einer kurveninneren Fahrspur fahrenden Fahrzeug.

Einander entsprechende Teile sind in allen Figuren mit den gleichen Bezugszeichen versehen.

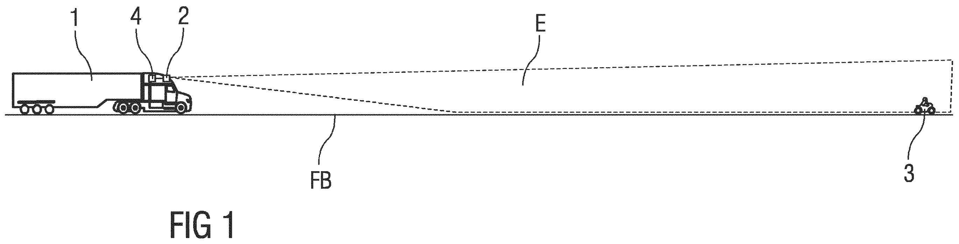

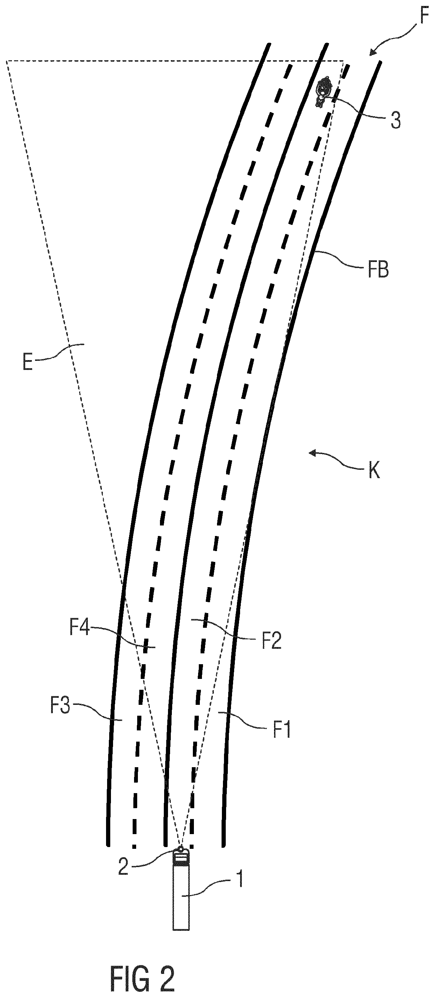

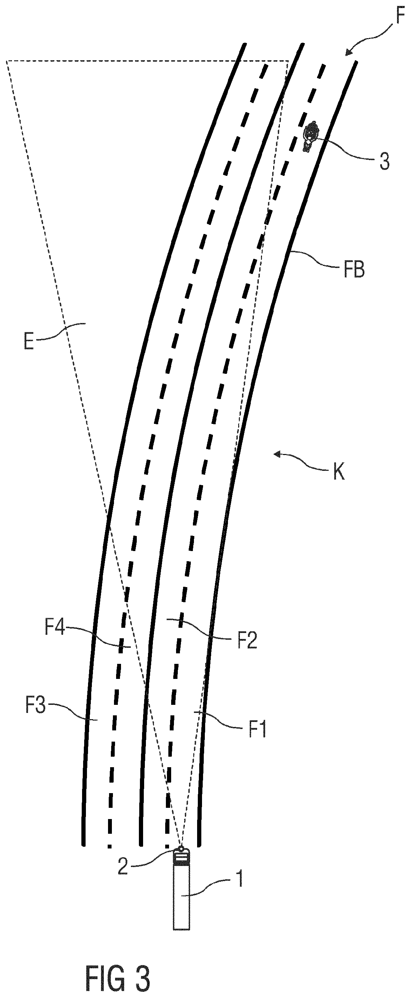

In Figur 1 ist eine Seitenansicht eines Fahrzeugs 1 mit einem sich im Erfassungsbereich E einer Erfassungseinheit 2 einer Umgebungssensorik auf einer Fahrbahn FB des Fahrzeugs 1 befindenden nichtüberfahrbaren Objekt 3 dargestellt. Die Figuren 2 und 3 zeigen jeweils einen Fahrstreckenabschnitt F mit jeweils Fahrspuren F1, F2 und F3, F4 für jede Fahrtrichtung, wobei der Fahrstreckenabschnitt F gekrümmt ist, also eine Kurve K aufweist.

Ein Fahrzeug 1, welches beispielsweise als Lastkraftwagen ausgebildet ist und im automatisierten Fahrbetrieb fährt, insbesondere ohne dass sich ein Fahrzeugnutzer im Fahrzeug 1 befindet, fährt in Figur 2 auf einer kurvenäußeren Fahrspur F2 und in Figur 3 auf einer kurveninneren Fahrspur F1.

Das Fahrzeug 1 umfasst eine Datenverarbeitungseinheit 4, die mit einer Anzahl von Erfassungseinheiten 2 der Umgebungssensorik des Fahrzeugs 1 verbunden ist, wobei die Erfassungseinheiten 2 radarbasiert, lidarbasiert und/oder kamerabasiert ausgebildet sind. Zudem weist das Fahrzeug 1 eine nicht näher dargestellte satellitengestützte Positionsbestimmungseinheit auf, welche fortlaufend ein Positionssignal empfängt, anhand dessen eine momentane Position des Fahrzeugs 1 ermittelt wird.

Ein solches automatisiert fahrendes Fahrzeug 1 wird anhand erfasster Signale der Umgebungssensorik, des Positionssignals sowie anhand von Kartendaten einer fahrzeugseitig hinterlegten digitalen Karte innerhalb einer vorhandenen Infrastruktur lokalisiert und ein Fahrverhalten des Fahrzeugs 1 wird in Bezug auf anhand erfasster Signale der Umgebungssensorik vermessener Verkehrsteilnehmer abgestimmt.

Die fahrzeugseitig installierte Umgebungssensorik weist Vermessungscharakteristiken auf, die durch einen Sensortyp, eine Bauform und physikalische Randbedingungen bestimmt sind. Typischerweise stellt die Umgebungssensorik einen Kompromiss aus verschiedenen Funktionsaufgaben dar. Beispielsweise wird mittels einer lidarbasierten Erfassungseinheit 2 ein verkehrsrelevanter Bereich vor dem Fahrzeug 1 dreidimensional vermessen, wobei anhand erfasster Signale einer kamerabasierten Erfassungseinheit 2 eine Semantik einer erfassten Szene vor dem Fahrzeug 1 bestimmt wird, wobei Verkehrszeichen und Lichtsignalanlagen erkannt werden.

Daraus abgeleitete Anforderungen bestimmen Parameter der jeweiligen Erfassungseinheit 2, wie z. B. eine Basisbreite, eine Brennweite, ein Öffnungswinkel, eine Pixeldichte, einen Sensortyp, insbesondere in Bezug darauf, ob Signale der kamerabasierten Erfassungseinheit 2 mehrfarbig oder einfarbig erfasst werden.

Im Folgenden wird ein Verfahren zum automatisierten Fahrbetrieb des Fahrzeugs 1 beschrieben, wobei ein Fokus des Verfahrens auf einer lidarbasierten oder kamerabasierten Erfassungseinheit 2 liegt, deren Erfassungsbereich E, welcher auch als Sichtfeld oder Frustrum bezeichnet wird, vor das Fahrzeug 1 gerichtet ist und die Erfassungseinheit 2 beispielsweise ein so genannter Long Distance Sensor ist.

Vor dem Fahrzeug 1 befindet sich kein Vorausfahrer und es besteht eine hohe Anforderung an eine Sichtweite der Erfassungseinheit 2 und eine Anforderung, dass das Objekt 3 detektiert wird, um angemessen auf dieses reagieren zu können. Um eine Kollision des Fahrzeugs 1 mit dem detektierten Objekt 3 vermeiden zu können, kann bei rechtzeitiger Detektion desselben beispielsweise eine Notbremsung eingeleitet und/oder eine Ausweichtrajektorie automatisiert befahren werden.

Die vergleichsweise weit schauende Erfassungseinheit 2, mittels welcher ein nichtüberfahrbares Objekt 3 detektiert werden kann, ist, wie oben beschrieben, ein lidarbasierter Sensor oder ein Kamerasensor mit einem gegebenen Öffnungswinkel, wobei die Erfassungseinheit 2 auch aus mehreren Einzelsensoren bestehen kann.

Ziel für einen automatisierten Fahrbetrieb eines Fahrzeugs 1, insbesondere eines Lastkraftwagens zum Gütertransport, ist es mit einer zulässigen maximal möglichen Fahrgeschwindigkeit zu fahren, um eine Zeitdauer, in der das Fahrzeug 1 mit seiner Ladung unterwegs ist, aus wirtschaftlichen Gründen zu minimieren.

Beim Durchfahren einer Kurve K ist eine Sichtweite der vor das Fahrzeug 1 gerichteten Erfassungseinheit 2 unter Umständen durch eine Leitplanke, durch Bebauung und/oder durch Pflanzen beschränkt. Ein solcher Zustand gilt insbesondere für die kurveninnere Fahrspur F1.

Um auf ein potenziell nichtüberfahrbares Objekt 3 auf der jeweiligen Fahrspur F1, F2 angemessen durch Bremsen und/oder Ausweichen reagieren zu können, ist es erforderlich, dass das Fahrzeug 1 seine momentane Fahrgeschwindigkeit verringert, wodurch sich die Zeitdauer, in der sich das Fahrzeug 1 im Fahrbetrieb befindet, erhöht.

Fährt das Fahrzeug 1, wie in Figur 3 gezeigt ist, auf der kurveninneren Fahrspur F1, so ist ein Sichtfeld und somit der Erfassungsbereich E der Erfassungseinheit 2 eingeschränkt. Fährt das Fahrzeug 1 hingegen auf der kurvenäußeren Fahrspur F2, so ist die Sichtweite erhöht, wie in Figur 1 gezeigt ist.

Bei dem Objekt 3 handelt es sich beispielsweise um ein Motorrad. Insbesondere bei Motorrädern besteht in Kurven die Gefahr, dass bei Vorliegen einer durch Splitt und/oder Niederschlag geprägten Fahrbahnoberfläche, aufgrund einer verringerten Haftung zwischen Reifen des Motorrads und der Fahrbahnoberfläche, Motorradfahrer die Kontrolle über ihr Motorrad verlieren und wegrutschen. Dabei können diese auf eine Fahrspur F1, F2 ihres Gegenverkehrs gelangen.

Dies ist in den Figuren 2 und 3 beispielhaft dargestellt. Hierbei ist das als Motorrad ausgebildete Objekt 3 durch ein Wegrutschen auf die Gegenfahrbahn geraten und dort zum Stillstand gelangt. Bei derartigen durch Splitt und/oder Niederschlag geprägten Fahrbahnoberflächen, ist auch eine Haftung von Reifen des Fahrzeugs 1 auf der Fahrbahn FB verringert, woraus sich unter anderem ein verlängerter Bremsweg ergibt. Um ein Sichtfeld und somit den Erfassungsbereich E der Erfassungseinheit 2 zu erhöhen und eine Kollision mit dem Objekt 3, beispielsweise einem Motorrad zu vermeiden, ist deshalb vorgesehen, dass dann, wenn erkannt wird, dass sich das Fahrzeug 1 der Kurve K nähert, auf einer kurvenäußeren Seite des Fahrzeugs 1 eine benachbarte freie Fahrspur F2 vorhanden ist, aufgrund der vorausliegenden Kurve K eine Sichtweitenbeschränkung der in Fahrtrichtung des Fahrzeugs 1 gerichteten Erfassungseinheit 2 vorliegt und in der Kurve aufgrund der Fahrbahnbeschaffenheit ein gegenüber einem vorgegebenen Sollwert verlängerter Bremsweg und/oder eine verringerte Bodenhaftung des Fahrzeugs 1 und/oder anderer Fahrzeuge, beispielsweise des als Motorrad ausgebildeten Objekts 3, vorliegen oder vorliegt, automatisch ein Spurwechsel des Fahrzeugs 1 auf die kurvenäußere benachbarte freie Fahrspur F2 durchgeführt wird und gegebenenfalls eine momentane Fahrgeschwindigkeit des Fahrzeugs 1 automatisch reduziert wird.

Somit ist es möglich, die Wahrscheinlichkeit eines Personenschadens in Kurvensituationen mit Sichtverdeckung zu reduzieren, indem durch Verwendung der Erfassungseinheit Risikofaktoren wie Splitt und/oder Niederschläge, beispielsweise Regen, Schnee oder Eis, auf der Fahrbahn FB im Bereich vor und in der Kurve K bereits vor Eintreten oder während der Kurvenfahrt identifiziert werden. Der Fokus liegt hierbei insbesondere vor allem auf den innenliegenden Fahrspuren F1, F2 sowie der Ego-Fahrspur, da sich im Falle eines (Motorrad-)Unfalls aufgrund entstehender Kräfte Personen oder Fahrzeugteile in die Ego-Spur bewegen können und sich so das Risiko eines Personenschadens erhöhen würde.

Dabei wird ermöglicht, dass bei Erkennung eines entsprechenden Risikofaktors die Fahrgeschwindigkeit bei Kurvenverdeckung präventiv reduziert wird und/oder ein Ausweichen auf eine kurvenäußere Fahrspur FS2 zur Verbesserung der Sicht in die Kurve K durchgeführt wird, um so den Bremsweg im Falle einer Notbremsung reduzieren zu können und eine Durchführbarkeit von möglichen Ausweichmanövern frühzeitig prüfen zu können.

## Patentansprüche

1. Verfahren zum Betrieb eines automatisiert fahrenden Fahrzeugs (1),
wobei
dann, wenn erkannt wird, dass
- sich das Fahrzeug (1) einer Kurve (K) nähert,
- auf einer kurvenäußeren Seite des Fahrzeugs (1) eine benachbarte freie Fahrspur (F2) vorhanden ist,
- aufgrund der vorausliegenden Kurve (K) eine Sichtweitenbeschränkung zumindest einer in Fahrtrichtung des Fahrzeugs (1) gerichteten Erfassungseinheit (2) einer Umgebungssensorik vorliegt und
- in der Kurve aufgrund einer Fahrbahnbeschaffenheit ein gegenüber einem vorgegebenen Sollwert verlängerter Bremsweg und/oder eine verringerte Bodenhaftung des Fahrzeugs (1) und/oder anderer Fahrzeuge vorliegen oder vorliegt,
automatisch ein Spurwechsel des Fahrzeugs (1) auf die kurvenäußere benachbarte freie Fahrspur (F2) durchgeführt wird.

2. Verfahren nach Anspruch 1,
**dadurch gekennzeichnet, dass**
zusätzlich zur automatischen Durchführung des Spurwechsels des Fahrzeugs (1) auf die kurvenäußere benachbarte freie Fahrspur (F2) eine momentane Fahrgeschwindigkeit des Fahrzeugs (1) automatisch reduziert wird.

3. Verfahren nach Anspruch einem der vorhergehenden Ansprüche,
**dadurch gekennzeichnet, dass**
ein Vorliegen des aufgrund einer Fahrbahnbeschaffenheit gegenüber einem vorgegebenen Sollwert verlängerten Bremswegs und/oder der verringerten Bodenhaftung des Fahrzeugs (1) und/oder anderer Fahrzeuge anhand einer Erfassung von Splitt und/oder Niederschlag auf einer Fahrbahnoberfläche erkannt wird.

4. Verfahren nach einem der vorhergehenden Ansprüche,
**dadurch gekennzeichnet, dass**
der Sollwert in Abhängigkeit der momentanen Fahrgeschwindigkeit des Fahrzeugs (1) variabel vorgegeben wird.

5. Verfahren nach einem der vorhergehenden Ansprüche,
**dadurch gekennzeichnet, dass**
eine Sichtweitenbeschränkung erkannt wird, wenn die Sichtweite der zumindest einen Erfassungseinheit (2) einen vorgegebenen Schwellwert unterschreitet, wobei der Schwellwert in Abhängigkeit der momentanen Fahrgeschwindigkeit des Fahrzeugs (1) variabel vorgegeben wird.

6. Verfahren nach einem der vorhergehenden Ansprüche,
**dadurch gekennzeichnet, dass**
das Vorhandensein einer kurvenäußeren Fahrspur (F2) anhand von Kartendaten einer digitalen Karte und/oder zumindest anhand erfasster Signale einer Kamera des Fahrzeugs (1) ermittelt wird.

7. Verfahren nach einem der vorhergehenden Ansprüche,
**dadurch gekennzeichnet, dass**
der Spurwechsel in Abhängigkeit einer vor dem Fahrzeug (1) erfassten Verkehrsdichte durchgeführt wird.

8. Verfahren nach einem der vorhergehenden Ansprüche,
**dadurch gekennzeichnet, dass**
die momentane Fahrgeschwindigkeit des Fahrzeugs (1) an eine kurven- und/oder kuppeninduzierte Sichtweitenbeschränkung der zumindest einen Erfassungseinheit (2) angepasst wird.

9. Verfahren nach einem der vorhergehenden Ansprüche,
**dadurch gekennzeichnet, dass**
eine erforderliche Sichtweite der zumindest einen Erfassungseinheit (2) anhand eines prognostizierten momentanen Bremswegs des Fahrzeugs (1) ermittelt wird.

10. Vorrichtung zur Durchführung eines Verfahrens nach einem der vorhergehenden Ansprüche,
**gekennzeichnet durch** eine Datenverarbeitungseinheit (4), die mit der zumindest einen Erfassungseinheit (2) der Umgebungssensorik des Fahrzeugs (1) verbunden ist, und ausgebildet ist,
als Voraussetzungen zu erkennen, ob
- sich das Fahrzeug (1) einer Kurve (K) nähert,
- auf einer kurvenäußeren Seite des Fahrzeugs (1) eine benachbarte freie Fahrspur (F2) vorhanden ist,
- aufgrund der vorausliegenden Kurve (K) eine Sichtweitenbeschränkung zumindest einer in Fahrtrichtung des Fahrzeugs (1) gerichteten Erfassungseinheit (2) einer Umgebungssensorik vorliegt und
- in der Kurve (K) aufgrund einer Fahrbahnbeschaffenheit ein gegenüber einem vorgegebenen Sollwert verlängerter Bremsweg und/oder eine verringerte Bodenhaftung des Fahrzeugs (1) und/oder anderer Fahrzeuge vorliegen oder vorliegt,
und bei Vorliegen der Voraussetzungen eine entsprechende Information an einen Trajektoriengenerator zu leiten, welcher ausgebildet ist, zumindest eine Trajektorie für den Spurwechsel auf die kurvenäußere freie Fahrspur (F2) zu erzeugen und die erzeugte Trajektorie an eine Aktuatorik des Fahrzeugs (1) zu übermitteln.

11. Vorrichtung nach Anspruch 10,
**dadurch gekennzeichnet, dass**
der Trajektoriengenerator ausgebildet ist, zusätzlich zur Erzeugung der Trajektorie und Übermittlung der Trajektorie an die Aktorik des Fahrzeugs (1) eine momentane Fahrgeschwindigkeit des Fahrzeugs (1) automatisch zu reduzieren.

12. Fahrzeug (1), umfassend eine Vorrichtung nach Anspruch 10 oder 11.

## Claims

1. Method for operating an automatedly driving vehicle (1), wherein
when it is detected that
- the vehicle (1) approaches a curve (K),
- there is an adjacent free lane (F2) on a side of the vehicle (1) on the outside of the curve,
- due to the curve (K) ahead, there is a visual range restriction of at least one detection unit (2) of an environmental sensor system directed in the direction of travel of the vehicle (1) and
- in the curve, due to the condition of the road surface, there is a longer braking distance than a specified target value and/or a reduced road grip of the vehicle (1) and/or other vehicles,
the vehicle (1) automatically changes lanes to the adjacent free lane (F2) on the outside of the curve.

2. Method according to claim 1,
**characterized in that**
in addition to automatically changing the lane of the vehicle (1) to the adjacent free lane (F2) on the outside of the curve, the current driving speed of the vehicle (1) is automatically reduced.

3. Method according to either of the preceding claims,
**characterized in that**
the presence of a braking distance that is longer than a specified target value due to the condition of the road surface and/or reduced road grip of the vehicle (1) and/or other vehicles is detected by detecting grit and/or precipitation on a road surface.

4. Method according to any of the preceding claims,
**characterized in that**
the target value is variably specified depending on the current driving speed of the vehicle (1).

5. Method according to any of the preceding claims,
**characterized in that**
a visual range restriction is detected when the visual range of the at least one detection unit (2) falls below a specified threshold value, the threshold value being variably specified depending on the current driving speed of the vehicle (1).

6. Method according to any of the preceding claims,
**characterized in that**
the presence of a lane (F2) on the outside of the curve is determined on the basis of map data from a digital map and/or at least on the basis of signals detected by a camera of the vehicle (1).

7. Method according to any of the preceding claims,
**characterized in that**
the lane change is carried out depending on the traffic density detected in front of the vehicle (1).

8. Method according to any of the preceding claims,
**characterized in that**
the current driving speed of the vehicle (1) is adapted to a curve- and/or hilltop-induced visual range restriction of the at least one detection unit (2).

9. Method according to any of the preceding claims,
**characterized in that**
a required visual range of the at least one detection unit (2) is determined on the basis of a predicted current braking distance of the vehicle (1).

10. Device for carrying out a method according to any of the preceding claims, **characterized by** a data processing unit (4) which is connected to the at least one detection unit (2) of the environmental sensor system of the vehicle (1) and is designed to detect as prerequisites whether
- the vehicle (1) approaches a curve (K),
- there is an adjacent free lane (F2) on a side of the vehicle (1) on the outside of the curve,
- due to the curve (K) ahead, there is a visual range restriction of at least one detection unit (2) of an environmental sensor system directed in the direction of travel of the vehicle (1) and
- in the curve (K), due to the condition of the road surface, there is a longer braking distance than a specified target value and/or a reduced road grip of the vehicle (1) and/or other vehicles, and if the prerequisites are met, to send corresponding information to a trajectory generator which is designed to generate at least one trajectory for the lane change to the free lane (F2) on the outside of the curve and to transmit the generated trajectory to an actuator system of the vehicle (1).

11. Device according to claim 10,
**characterized in that**
the trajectory generator is designed to automatically reduce the current driving speed of the vehicle (1) in addition to generating the trajectory and transmitting the trajectory to the actuators of the vehicle (1).

12. Vehicle (1) comprising a device according to claim 10 or 11.

## Revendications

1. Procédé permettant de faire fonctionner un véhicule à conduite automatique (1), dans lequel
lorsqu'il est reconnu que
- le véhicule (1) s'approche d'un virage (K),
- il existe une voie libre voisine (F2) sur un côté extérieur au virage du véhicule (1),
- en raison du virage précédent (K), il existe une limitation de la visibilité d'au moins une unité de détection (2) d'un système de capteurs d'environnement orientée dans le sens de la marche du véhicule (1) et
- dans le virage, en raison d'un état de la chaussée, il existe une distance de freinage prolongée par rapport à une valeur de consigne prédéfinie et/ou il existe une adhérence réduite du véhicule (1) et/ou d'autres véhicules,
un changement de voie du véhicule (1) vers la voie libre voisine (F2) située à l'extérieur du virage est automatiquement réalisé.

2. Procédé selon la revendication 1,
**caractérisé en ce que**
en plus de la réalisation automatique du changement de voie du véhicule (1) sur la voie libre voisine (F2) située à l'extérieur du virage, une vitesse de conduite instantanée du véhicule (1) est automatiquement réduite.

3. Procédé selon une revendication des revendications précédentes,
**caractérisé en ce que**
une présence de la distance de freinage prolongée par rapport à une valeur de consigne prédéfinie et/ou de l'adhérence réduite du véhicule (1) et/ou d'autres véhicules en raison d'un état de la chaussée est reconnue à l'aide d'une détection de gravillons et/ou de précipitations sur une surface de la chaussée.

4. Procédé selon l'une des revendications précédentes,
**caractérisé en ce que**
la valeur de consigne est prédéfinie de manière variable en fonction de la vitesse de conduite instantanée du véhicule (1).

5. Procédé selon l'une des revendications précédentes,
**caractérisé en ce que**
une limitation de la visibilité est reconnue lorsque la visibilité de l'au moins une unité de détection (2) est inférieure à une valeur seuil prédéfinie, la valeur seuil étant prédéfinie de manière variable en fonction de la vitesse de conduite instantanée du véhicule (1).

6. Procédé selon l'une des revendications précédentes,
**caractérisé en ce que**
la présence d'une voie de circulation (F2) extérieure au virage est déterminée à l'aide de données cartographiques d'une carte numérique et/ou au moins à l'aide de signaux détectés d'une caméra du véhicule (1).

7. Procédé selon l'une des revendications précédentes,
**caractérisé en ce que**
le changement de voie est réalisé en fonction d'une densité de trafic détectée devant le véhicule (1).

8. Procédé selon l'une des revendications précédentes,
**caractérisé en ce que**
la vitesse de conduite instantanée du véhicule (1) est adaptée à une limitation de visibilité induite par un virage et/ou une crête de l'au moins une unité de détection (2).

9. Procédé selon l'une des revendications précédentes,
**caractérisé en ce que**
une distance de visibilité nécessaire de l'au moins une unité de détection (2) est déterminée à l'aide d'une distance de freinage instantanée pronostiquée du véhicule (1).

10. Dispositif pour la réalisation d'un procédé selon l'une des revendications précédentes, **caractérisé par** une unité de traitement de données (4) qui est reliée à l'au moins une unité de détection (2) du système de capteurs d'environnement du véhicule (1) et qui est conçue pour reconnaître, en tant que conditions préalables, si
- le véhicule (1) s'approche d'un virage (K),
- il existe une voie libre voisine (F2) sur un côté extérieur au virage du véhicule (1),
- en raison du virage précédent (K), il existe une limitation de la visibilité d'au moins une unité de détection (2) d'un système de capteurs d'environnement orientée dans le sens de la marche du véhicule (1) et
- dans le virage (K), une distance de freinage prolongée par rapport à une valeur de consigne prédéfinie existe et/ou une adhérence réduite du véhicule (1) et/ou d'autres véhicules existe et, si les conditions préalables sont réunies, pour transmettre une information correspondante à un générateur de trajectoires qui est conçu pour générer au moins une trajectoire pour le changement de voie sur la voie libre (F2) située à l'extérieur du virage et pour transmettre la trajectoire générée à un système d'actionneurs du véhicule (1).

11. Dispositif selon la revendication 10,
**caractérisé en ce que**
le générateur de trajectoire est conçu pour réduire automatiquement une vitesse de conduite instantanée du véhicule (1) en plus de la génération de la trajectoire et de la transmission de la trajectoire au système d'actionneurs du véhicule (1).

12. Véhicule (1) comprenant un dispositif selon la revendication 10 ou 11.
